# EUROPÄISCHE PATENTSCHRIFT

(11) **EP 3 230 058 B1**
(45) Veröffentlichungstag und Bekanntmachung des Hinweises auf die Patenterteilung: **23.02.2022**
(21) Anmeldenummer: 15777972.9
(22) Anmeldetag: 13.10.2015
(51) Int. Cl.: B32B 17/10, C03C 27/12

(54) **VERBUNDGLAS MIT GERINGER DICKE FÜR EIN HEAD-UP-DISPLAY (HUD)**
LAMINATED GLASS WITH LOW THICKNESS FOR A HEAD-UP DISPLAY (HUD)
VITRE STRATIFIÉE AYANT UNE MOINDRE ÉPAISSEUR POUR UN AFFICHAGE TÊTE HAUTE (HUD)

(30) Priorität: 08.12.2014 EP 14196732
(43) Veröffentlichungstag der Anmeldung: 18.10.2017
(73) Patentinhaber: SAINT-GOBAIN GLASS FRANCE, 92400 Courbevoie (FR)
(72) Erfinder: ARNDT, Martin, 52066 Aachen (DE); KREMERS, Stephan, 52525 Heinsberg (DE)
(74) Vertreter: Gebauer, Dieter Edmund
(86) Internationale Anmeldenummer: PCT/EP2015/073625
(87) Internationale Veröffentlichungsnummer: WO 2016/091435

(56) Entgegenhaltungen:
- EP-A1- 1 800 855
- EP-A2- 0 420 228
- US-A1- 2005 142 332
- US-A1- 2009 294 212
- US-A1- 2010 314 900
- US-A1- 2012 094 084

## Beschreibung

Die Erfindung betrifft ein Verbundglas und eine Projektionsanordnung für ein Head-Up-Display, ein Verfahren zur Herstellung des Verbundglases und dessen Verwendung.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Bei den vorstehend beschriebenen Head-Up-Displays tritt das Problem auf, dass das Projektorbild an beiden Oberflächen der Windschutzscheibe reflektiert wird. Dadurch nimmt der Fahrer nicht nur das gewünschte Hauptbild wahr, sondern auch ein leicht versetztes, in der Regel intensitätsschwächeres Nebenbild. Letzteres wird gemeinhin auch als Geisterbild bezeichnet. Dieses Problem wird gemeinhin dadurch gelöst, dass die reflektierenden Oberflächen mit einem bewusst gewählten Winkel zueinander angeordnet werden, so dass Hauptbild und Geisterbild überlagert werden, wodurch das Geisterbild nicht mehr störend auffällt. Der Keilwinkel beträgt bei herkömmlichen Verbundglasern für Head-Up-Displays typischerweise etwa 0,5 mrad.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant (lineare Dickenänderung) sein oder sich positionsabhängig ändern (nichtlineare Dickenänderung). Verbundgläser mit Keilfolien sind beispielsweise aus WO2009/071135A1, EP1800855B1 oder EP1880243A2 bekannt. Insbesondere zeigt EP 1800855 A1 eine Verbundscheibe mit mindestens zwei Zwischenschichten, wobei der Keilwinkel mindestens 0,25 mrad beträgt.

Keilfolien werden typischerweise mittels Extrusion hergestellt, wobei eine keilförmige Extrusionsdüse verwendet wird. Die Herstellung einer Keilfolie mit einem gewünschten Keilwinkel, welcher unter anderem von der konkreten Scheibengeometrie und der Projektionsanordnung des Head-Up-Displays abhängig ist, ist sehr teuer und aufwendig.

Der Erfindung liegt die Aufgabe zugrunde, ein verbessertes Verbundglas für ein Head-Up-Display bereitzustellen, welches kostengünstiger und einfacher herzustellen ist als herkömmliche gattungsgemäße Verbundgläser.

Die Aufgabe der vorliegenden Erfindung wird erfindungsgemäß durch ein Verbundglas gemäß Anspruch 1 gelöst. Bevorzugte Ausführungen gehen aus den Unteransprüchen hervor.

Das erfindungsgemäße Verbundglas für ein Head-Up-Display (HUD) weist eine Oberkante und eine Unterkante auf. Mit Oberkante wird diejenige Seitenkante des Verbundglases bezeichnet, welche dafür vorgesehen ist, in Einbaulage nach oben zu weisen. Mit Unterkante wird diejenige Seitenkante bezeichnet, welche dafür vorgesehen ist, in Einbaulage nach oben zu weisen. Ist das Verbundglas die Windschutzscheibe eines Kraftfahrzeugs, so wird die Oberkante häufig auch als Dachkante und die Unterkante als Motorkante bezeichnet.

Das erfindungsgemäße Verbundglas (oder Verbundscheibe) umfasst eine Außenscheibe und eine Innenscheibe, die über eine thermoplastische Zwischenschicht miteinander verbunden sind. Das Verbundglas ist dafür vorgesehen, in einer Öffnung, insbesondere einer Fensteröffnung eines Fahrzeugs, den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Innenscheibe weist eine Dicke von 0,5 mm bis 0,9 mm auf. Die Dicke der Zwischenschicht ist im vertikalen Verlauf zwischen der Unterkante und der Oberkante des Verbundglases zumindest abschnittsweise veränderlich mit einem maximalen Keilwinkel α von kleiner oder gleich 0,15 mrad. Der Keilwinkel weist aber zumindest abschnittsweise einen endlichen Keilwinkel auf, also einen Keilwinkel größer 0°. Mit "abschnittsweise" ist hier gemeint, dass der vertikale Verlauf zwischen Unterkante und Oberkante zumindest einen Abschnitt aufweist, in dem sich die Dicke der Zwischenschicht ortsabhängig ändert. Die Dicke kann sich aber auch in mehreren Abschnitte ändern oder im gesamten vertikalen Verlauf. Mit vertikalem Verlauf ist der Verlauf zwischen Unterkante und Oberkante mit Verlaufsrichtung im Wesentlichen senkrecht zu besagten Kanten bezeichnet.

Mit Keilwinkel wird der Winkel zwischen den beiden Oberflächen der Zwischenschicht bezeichnet. Ist der Keilwinkel nicht konstant, so sind zu seiner Messung an einem Punkt die Tangenten an die Oberflächen heranzuziehen.

Der Vorteil der Erfindung liegt in der Kombination aus mindestens einer dünnen Scheibe (der Innenscheibe) und dem kleinen Keilwinkel der Zwischenschicht. Durch die Verwendung von mindestens einer Scheibe, welche erheblich dünner ist als typische Scheiben für Windschutzscheiben (etwa 2,1 mm) liegen die reflektierenden Oberflächen näher beieinander. Dadurch sind Hauptbild und Geisterbild weniger stark zueinander verschoben, so dass sie mit einem vergleichsweise geringen Keilwinkel in Deckung gebracht werden können. Die erfindungsgemäßen Keilwinkel von kleiner oder gleich 0,3 mrad sind deutlich kleiner als die Keilwinkel für herkömmliche Verbundgläser im Bereich von 0,5 mrad. Die Verwendung dünner Scheiben ermöglicht also die Verwendung von thermoplastischen Folien mit nur geringen Keilwinkeln, welche kostengünstiger und einfacher herzustellen sind als Folien mit größeren Keilwinkeln. Erfindungsgemäß sind solche Folien durch Recken einer Folie mit konstanter Dicke gewonnen werden statt durch Extrusion.

Außerdem vermindern die erfindungsgemäß geringen Keilwinkel einen häufig auftretenden Nachteil der Verbundgläser für Head-Up-Displays. Durch Brechung und Reflexion an den verschiedenen Oberflächen des Verbundglases können in Transmission Doppelbilder auftreten - Objekte, welche durch das Verbundglas betrachtet werden, erscheinen dabei doppelt. Dieser Effekt kann durch auf das HUD optimierte Keilfolien (mit typischerweise von unten nach oben ansteigender Dicke, optimiert zur Vermeidung von Geisterbildern in Reflexion) verstärkt werden. Die Erfindung ermöglicht die Verwendung sehr geringer Keilwinkel, wodurch die Doppelbildproblematik in Transmission vermindert wird.

Die mindestens eine dünne Scheibe verringert darüber hinaus das Gewicht des Verbundglases, was zu einem geringeren Kraftstoffverbrauch des Fahrzeugs beiträgt. Die Anforderungen an Fahrzeugscheiben hinsichtlich Stabilität und Bruchfestigkeit, insbesondere Kratzfestigkeit und Steinschlagfestigkeit, sind trotzdem gewährleistet, wozu auch eine Asymmetrie von Außenscheibe und Innenscheibe hinsichtlich ihrer Dicke beträgt.

Das erfindungsgemäße Verbundglas ist bevorzugt eine Windschutzscheibe eines Fahrzeugs, insbesondere eines Kraftfahrzeugs, beispielsweise eines Personenkraftwagens.

In einer besonders vorteilhaften Ausgestaltung ist auch die Außenscheibe eine dünnere Scheibe und weist eine Dicke von kleiner als 2,1 mm auf. Dadurch treten die vorstehend genannten Vorteile des erfindungsgemäßen Verbundglases verstärkt auf.

Die Dicke der Außenscheibe beträgt t von 1,4 mm bis 1,8 mm, ganz besonders bevorzugt von 1,5 mm bis 1,7 mm. Die Dicke der Innenscheibe beträgt von 0,5 mm bis 0,9 mm beträgt, ganz besonders bevorzugt von 0,6 mm bis 0,8 mm. Mit diesen Dicken werden gute Eigenschaften hinsichtlich des Reflexionsverhaltens erreicht und Geisterbilder können wirksam mit den erfindungsgemäß geringen Keilwinkeln vermieden werden. Gleichzeitig sind die Verbundgläser ausreichend stabil, um als Fahrzeugverglasung verwendet zu werden. Die asymmetrische Kombination aus dickerer Außenscheibe und dünnerer Innenscheibe hat sich zur Steigerung von Steinschlagfestigkeit und Bruchfestigkeit bewährt.

Die Innenscheibe und die Außenscheibe bestehen bevorzugt aus Glas, besonders bevorzugt Kalk-Natron-Glas, was sich für Fenstergläser bewährt hat. Die Scheiben können aber auch aus anderen Glassorten bestehen, beispielsweise Borosilikatglas oder Aluminosilikatglas. Die Scheiben können grundsätzlich aber alternativ aus Kunststoff gefertigt sein, insbesondere Polycarbonat oder PMMA.

Der maximale Keilwinkel α beträgt kleiner oder gleich 0,15 mrad, bevorzugt kleiner oder gleich 0,1 mrad. Je kleiner der Keilwinkel, desto einfacher ist die Zwischenschicht durch Recken herzustellen, und desto weniger stark ausgeprägt ist die Problematik der Doppelbilder in Transmission. Mit dem maximalen Keilwinkel wird der größte Keilwinkel bezeichnet, der in der Zwischenschicht auftritt.

Je größer die Bildweite des HUDs ist, also der Abstand des virtuellen Bildes vom Verbundglas, desto geringer muss der Keilwinkel zur Vermeidung des Doppelbildes sein. Große Bildweiten treten insbesondere bei sogenannten "Augmented Reality" HUDs auf, bei denen nicht lediglich eine Information auf einen begrenzten Bereich der Windschutzscheibe projiziert wird, sondern Elemente der äußeren Umgebung in die Darstellung einbezogen werden. Beispiele hierfür sind die Markierung eines Fußgängers, die Anzeige des Abstands zu einem vorausfahrenden Fahrzeug oder die Projektion einer Navigationsangabe direkt auf die Fahrbahn, beispielsweise zur Markierung der zu wählenden Fahrspur. Für typische Bildweiten eines Augmented Reality HUD sind meist Keilwinkel kleiner oder gleich 0,15 mrad ausreichend.

Der Keilwinkel kann im vertikalen Verlauf konstant sein, was zu einer linearen Dickenänderung der Zwischenschicht führt, wobei die Dicke typischerweise von unten nach oben größer wird. Die Richtungsangabe "von unten nach oben" bezeichnet die Richtung von Unterkante zu Oberkante, also den vertikalen Verlauf. Es können aber auch komplexere Dickenprofile vorliegen, bei denen der Keilwinkel von unten nach oben veränderlich (das heißt im vertikalen Verlauf ortsabhängig) ist, linear oder nicht-linear.

Bevorzugt nimmt die Dicke der Zwischenschicht im vertikalen Verlauf von unten nach oben zumindest abschnittsweise zu.

Die veränderliche Dicke der Zwischenschicht kann auf einen Abschnitt des vertikalen Verlaufs beschränkt sein. Dieser Abschnitt entspricht bevorzugt mindestens dem sogenannten HUD-Bereich des Verbundglases, also dem Bereich, in dem der HUD-Projektor ein Bild erzeugt. Der Abschnitt kann aber auch größer sein. Die Dicke der Zwischenschicht kann im gesamten vertikalen Verlauf veränderlich sein, beispielsweise von der Unterkante zur Oberkante im Wesentlichen stetig zunehmen.

Die Dicke der Zwischenschicht kann in horizontalen Schnitten (das heißt Schnitte etwa parallel zu Oberkante und Unterkante) konstant sein. Dann ist das Dickenprofil über die Breite des Verbundglases konstant. Die Dicke kann aber auch in horizontalen Schnitten veränderlich sein. Dann ist die Dicke nicht nur im vertikalen, sondern auch im horizontalen Verlauf veränderlich.

Die Zwischenschicht ist durch mindestens eine thermoplastische Folie ausgebildet. Der Keilwinkel ist durch Recken in der Folie erzeugt. Die keilförmige Folie ist nicht extrudiert, sondern ursprünglich als herkömmliche Folie mit im

Wesentlichen konstanter Dicke bereitgestellt und durch Recken so umgeformt, dass sie den gewünschten Keilwinkel aufweist. Dies ist einfacher und kostengünstiger als die Herstellung durch Extrusion. Der Fachmann erkennt nachträglich, ob ein Keilwinkel durch Recken oder durch Extrusion ausgebildet ist, insbesondere am typischen Dickenverlauf in der Nähe der Unterkante und/oder Oberkante.

Die Zwischenschicht weist bevorzugt eine Mindestdicke von 0,5 mm bis 1 mm, besonders bevorzugt von 0,6 mm bis 0,9 mm auf. Mit Mindestdicke wird die Dicke an der dünnsten Stelle der Zwischenschicht bezeichnet. Verbundgläser mit dünneren Zwischenschichten weisen häufig eine zu geringe Stabilität auf, um als Fahrzeugscheibe verwendet werden zu können. Thermoplastische Folien, insbesondere PVB-Folien werden in der Standarddicke 0,76 mm vertrieben. Aus diesen Folien lassen sich durch Recken vorteilhaft erfindungsgemäße Keilwinkel einbringen. Da die erfindungsgemäßen Keilwinkel sehr klein sind, wird die Folie lokal nicht so stark verdünnt, dass Probleme mit der Stabilität des Verbundglases auftreten.

Die Zwischenschicht enthält bevorzugt zumindest Polyvinylbutyral (PVB), Ethylenvinylacetat (EVA), Polyurethan (PU) oder Gemische oder Copolymere oder Derivate davon enthält, besonders bevorzugt PVB. Die Zwischenschicht ist in einer bevorzugten Ausgestaltung aus einer PVB-Folie ausgebildet.

Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

In einer Ausgestaltung der Erfindung ist die Außenscheibe und/oder die Innenscheibe eine chemisch vorgespannte Scheibe, bevorzugt die dünnere Innenscheibe, die geringeren Steinschlagbelastungen ausgesetzt ist. Beim chemischen Vorspannen wird durch lonenaustausch die chemische Zusammensetzung des Glases im Bereich der Oberfläche verändert. In einer besonders bevorzugten Ausgestaltung sind die Außenscheibe und die Innenscheibe nicht-vorgespannte Scheiben. In einer weiteren besonders bevorzugten Ausgestaltung ist die Außenscheibe eine nicht-vorgespannte Scheibe und die Innenscheibe eine chemisch vorgespannte Scheibe.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Das Verbundglas ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Das erfindungsgemäße Verbundglas kann eine funktionelle Beschichtung aufweisen, beispielweise eine IR-reflektierende oder absorbierende Beschichtung, eine UVreflektierende oder absorbierende Beschichtung, eine farbgebende Beschichtung, eine Beschichtung niedriger Emissivität, eine heizbare Beschichtung, eine Beschichtung mit Antennenfunktion, eine splitterbindende Beschichtung oder eine Beschichtung zur Abschirmung von elektromagnetischer Strahlung. Die funktionelle Beschichtung ist bevorzugt auf der Außenscheibe angeordnet. Die dickere Außenscheibe lässt sich technisch einfacher und kostengünstiger beschichten, beispielweise durch physikalische Gasphasenabscheidung (wie Sputtern) als die dünnere Innenscheibe. Die funktionelle Beschichtung ist bevorzugt auf der zur thermoplastischen Zwischenschicht hingewandte Oberfläche der Außenscheibe angeordnet, wo sie vor Korrosion und Beschädigung geschützt ist. Die funktionelle Beschichtung kann auch auf einer Einlagefolie in der Zwischenschicht, beispielsweise aus Polyethylenterephthalat (PET), angeordnet sein.

Das Verbundglas kann auch mit einer Zusatzfunktion versehen werden, indem zusätzlich oder alternativ zur funktionellen Beschichtung die Zwischenschicht funktionelle Einlagerungen aufweist, beispielsweise Einlagerungen mit IR-absorbierenden, UVabsorbierenden, farbgebenden oder akustischen Eigenschaften. Die Einlagerungen sind beispielsweise organische oder anorganische Ionen, Verbindungen, Aggregate, Moleküle, Kristalle, Pigmente oder Farbstoffe.

Die Erfindung umfasst weiter eine Projektionsanordnung für ein Head-Up-Display, mindestens umfassend ein erfindungsgemäßes Verbundglas und einen Projektor, der auf einen Bereich des Verbundglases gerichtet ist, wobei die Dicke der Zwischenschicht zumindest in diesem Bereich im vertikalen Verlauf veränderlich ist.

Der Bereich, auf den der Projektor gerichtet ist, ist der Bereich, in dem ein Bild durch den Projektor erzeugt werden kann. Dieser Bereich wird auch als HUD-Bereich des Verbundglases bezeichnet. Die Dicke der Zwischenschicht ist bevorzugt zumindest im HUD-Bereich veränderlich, insbesondere zumindest im gesamten HUD-Bereich, um Geisterbilder wirksam zu vermeiden. Der Abschnitt mit veränderlicher Dicke kann aber auch größer sein als der HUD-Bereich.

Die Erfindung wird weiter gelöst durch ein Verfahren zur Herstellung eines Verbundglases für ein Head-Up-Display mit einer Oberkante und einer Unterkante, wobei
(a) eine thermoplastische Zwischenschicht bereitgestellt wird, deren Dicke im Verlauf zwischen zwei gegenüberliegenden Kanten (nämliche denen, die als Unterkante und Oberkante vorgesehen sind) zumindest abschnittsweise veränderlich ist mit einem maximalen Keilwinkel α von kleiner oder gleich 0,15 mrad;
(b) die Zwischenschicht zwischen einer Außenscheibe aus Glas mit einer Dicke von 1,4 mm bis 1,8 mm und einer Innenscheibe aus Glas mit einer Dicke von 0,5 mm bis 0,9 mm angeordnet wird, wobei besagte Kanten (zwischen denen die Dicke veränderlich ist) zur Oberkante und Unterkante weisend ausgerichtet werden; und
(c) die Innenscheibe und die Außenscheibe durch Lamination miteinander verbunden werden.

Die vorstehend mit Bezug auf das Verbundglas beschriebenen bevorzugten Ausführungen gelten entsprechend für das erfindungsgemäße Verfahren.

Die thermoplastische Zwischenschicht wird als Folie bereitgestellt. Erfindungsgemäß ist dies eine herkömmliche thermoplastische Folie, insbesondere PVB-Folie, mit (im Ausgangszustand) im Wesentlichen konstanter Dicke. Die veränderliche Dicke mit dem erfindungsgemäßen Keilwinkel wird durch Recken der Folie, das heißt mechanische Krafteinwirkung durch geeignetes Ziehen, eingebracht. Die erfindungsgemäßen geringen Keilwinkel können durch Recken erreicht werden, was deutlich kostengünstiger ist als eine Herstellung der Keilfolie durch Extrusion.

Soll das Verbundglas gebogen sein, so werden die Außenscheibe und die Innenscheibe bevorzugt vor der Lamination einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

In einer bevorzugten Ausführung wird die Innenscheibe und oder die Außenscheibe mit einer chemischen Vorspannung versehen. Nach dem Biegen wird die Scheibe vorteilhafterweise langsam abgekühlt, bevorzugt bis zur Abkühlung auf eine Temperatur von 400 °C mit einer Abkühlrate von 0,05 °C/sec bis 0,5 °C/sec, um thermische Spannungen zu vermeiden. Es kann danach weiter abgekühlt werden, auch mit höheren Abkühlraten, weil unterhalb 400 °C die Gefahr der Erzeugung thermischen Spannungen gering ist. Das chemische Vorspannen erfolgt bevorzugt bei einer Temperatur von 300 °C bis 600 °C, besonders bevorzugt von 400 °C bis 500 °C. Die Scheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten Oberflächen-Druckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃). Übliche Zeiten für die Dauer betragen von 2 Stunden bis 48 Stunden. Nach der Behandlung mit der Salzschmelze wird die Scheibe auf Raumtemperatur abgekühlt. Anschließend wird die Scheibe gereinigt, bevorzugt mit Schwefelsäure (H₂SO₄). Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und / oder Druck.

Die Erfindung umfasst weiter die Verwendung eines erfindungsgemäßen Verbundglases in einem Kraftfahrzeug, bevorzugt einem Personenkraftwagen, als Windschutzscheibe, die als Projektionsfläche eines Head-Up-Displays dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung des erfindungsgemäßen Verbundglases,
- Fig. 2: einen Querschnitt durch das Verbundglas nach Figur 1,
- Fig. 3: das Verbundglas der Figur 2 als Bestandteil einer erfindungsgemäßen Projektionsanordnung und
- Fig. 4: ein Flussdiagramm einer Ausführungsform des erfindungsgemäßen Verfahrens.

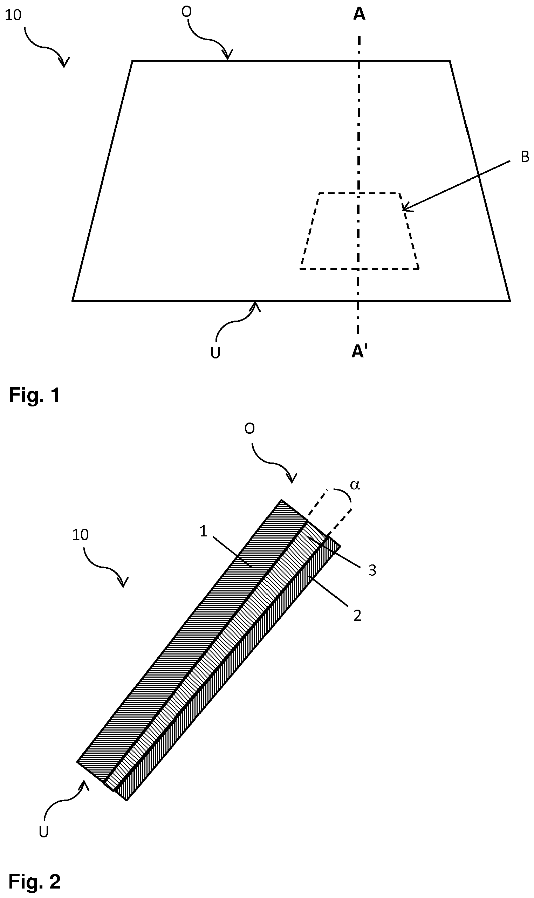

Fig. 1 und Fig. 2 zeigen je ein Detail eines erfindungsgemäßen Verbundglases 10, welches aus einer Außenscheibe 1 und einer Innenscheibe 2 besteht, die über eine thermoplastische Zwischenschicht 3 miteinander verbunden sind. Das Verbundglas ist als Windschutzscheibe eines Kraftfahrzeugs vorgesehen, welches mit einem Head-Up-Display ausgestattet ist. Die Außenscheibe 1 ist in Einbaulage der äußeren Umgebung zugewandt, die Innenscheibe 2 dem Fahrzeuginnenraum. Die Oberkante O des Verbundglases weist in Einbaulage nach oben zum Fahrzeugdach (Dachkante), die Unterkante U nach unten zum Motorraum (Motorkante).

Die Außenscheibe 1 besteht aus Natron-Kalk-Glas mit einer Dicke von 1,6 mm. Die Innenscheibe 2 besteht ebenfalls aus Natron-Kalk-Glas und weist eine Dicke von nur 0,7 mm auf. Die Außenscheibe 1 und insbesondere die Innenscheibe 2 sind also deutlich dünner als die Scheiben herkömmlicher Verbundgläser, welche typischerweise im Bereich von 1,8 mm bis 2,6 mm liegen, bei Windschutzscheiben üblicherweise 2,1 mm.

Die Dicke der Zwischenschicht 3 nimmt im vertikalen Verlauf von der Unterkante U zur Oberkante O stetig zu. Die Dickenzunahme ist in der Figur der Einfachheit halber linear dargestellt, kann aber auch komplexere Profile aufweisen. Die Zwischenschicht 3 ist aus einer einzelnen Folie aus PVB ausgebildet. Die Folie war im Ausgangszustand eine PVB-Folie mit der Standarddicke 0,76 mm. Der Dickenzunahme wurde durch Recken, also Ziehen an der Unterkante U, in die Folie eingebracht. Der Keilwinkel α beträgt etwa 0,1 mrad. Keilwinkel herkömmlicher Verbundgläser für HUDs liegen im Bereich um 0,5 mrad.

In der Figur ist auch ein Bereich B angedeutet, welche dem HUD-Bereich des Verbundglases entspricht. In diesem Bereich sollen Bilder durch einen HUD-Projektor erzeugt werden. Durch die keilförmige Ausbildung der Zwischenschicht werden die beiden Bilder, die durch Reflexion des Projektorbildes an den beiden von der Zwischenschicht 3 abgewandten Oberfläche der Außenscheibe 1 und der Innenscheibe 2 erzeugt werden, miteinander überlagert. Störende Geisterbilder treten daher in geringem Maße auf.

Die geringen Dicken von Außenscheibe 1 und Innenscheibe 2 führen dazu, dass sehr geringe Keilwinkel α nötig sind, welche sich problemlos durch Recken erzeugen lassen. Dies ist deutlich einfacher und kostengünstiger als eine Herstellung der Keilfolie durch Extrusion. Außerdem führen große Keilwinkel häufig zu ausgeprägten Doppelbildern in Transmission, was hier auch vermieden werden kann.

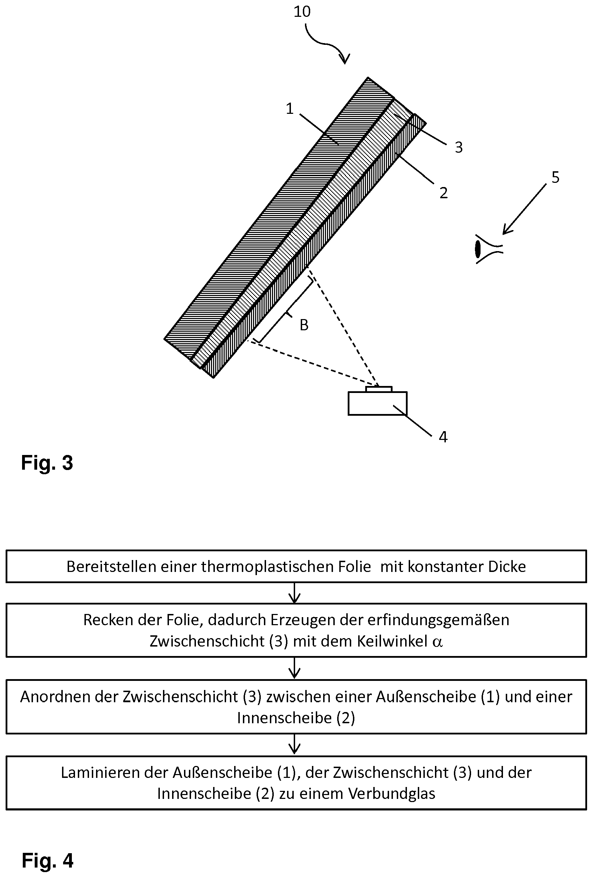

Fig. 3 zeigt das Verbundglas 10 der Figuren 1 und 2 als Teil einer Projektionsanordnung für ein HUD. Die Anordnung umfasst außer dem Verbundglas 10 einen Projektor 4, welcher auf einen Bereich B gerichtet ist. In dem Bereich B (HUD-Bereich) können durch den Projektor Bilder erzeugt werden, welche vom Betrachter 5 (Fahrzeugfahrer) als virtuelle Bilder auf der von ihm abgewandten Seite des Verbundglases 10 wahrgenommen werden. Der Keilwinkel im Bereich B führt zu gegeneinander geneigten Oberflächen der Außenscheibe 1 und der Innenscheibe 2, wodurch Geisterbilder vermieden werden können.

Fig. 4 zeigt ein Flussdiagramm eines Ausführungsbeispiels des erfindungsgemäßen Verfahrens zur Herstellung eines erfindungsgemäßen Verbundglases 10.

### Bezugszeichenliste:

- (10): Verbundglas

- (1): Außenscheibe
- (2): Innenscheibe
- (3): thermoplastische Zwischenschicht
- (4): Projektor
- (5): Betrachter / Fahrzeugfahrer

- (O): Oberkante
- (U): Unterkante

- (B): Bereich des Verbundglases / HUD-Bereich

- α: Keilwinkel

- A-A': Schnittlinie

## Patentansprüche

1. Verbundglas (10) für ein Head-Up-Display mit einer Oberkante (O) und einer Unterkante (U), mindestens umfassend eine Außenscheibe (1) aus Glas und eine Innenscheibe (2) aus Glas, die über eine thermoplastische Zwischenschicht (3) miteinander verbunden sind, wobei die Innenscheibe (2) eine Dicke von 0,5 mm bis 0,9 mm aufweist, und wobei die Dicke der Zwischenschicht (3) im vertikalen Verlauf zwischen der Unterkante (U) und der Oberkante (O) zumindest abschnittsweise veränderlich ist mit einem maximalen Keilwinkel (α) von kleiner oder gleich 0,15 mrad,
wobei die Dicke der Außenscheibe (1) von 1,4 mm bis 1,8 mm beträgt,
wobei die Zwischenschicht (3) durch mindestens eine thermoplastische Folie ausgebildet ist, in welcher der Keilwinkel (α) durch Recken erzeugt ist.

2. Verbundglas (10) nach Anspruch 1, das eine Fahrzeug-Windschutzscheibe ist.

3. Verbundglas (10) nach einem der Ansprüche 1 oder 2, wobei die Dicke der Innenscheibe (2) von 0,6 mm bis 0,8 mm beträgt.

4. Verbundglas (10) nach einem der Ansprüche 1 bis 3, wobei der Keilwinkel (α) kleiner oder gleich 0,1 mrad, beträgt.

5. Verbundglas (10) nach einem der Ansprüche 1 bis 4, wobei die Zwischenschicht (3) eine Mindestdicke von 0,5 mm bis 1 mm, bevorzugt von 0,6 mm bis 0,9 mm aufweist.

6. Verbundglas (10) nach einem der Ansprüche 1 bis 5, wobei die Zwischenschicht (3) zumindest Polyvinylbutyral (PVB), Ethylenvinylacetat (EVA), Polyurethan (PU) oder Gemische oder Copolymere oder Derivate davon enthält.

7. Verbundglas (10) nach einem der Ansprüche 1 bis 6, wobei die Außenscheibe (1) und/oder die Innenscheibe (2) eine chemisch vorgespannte Scheibe ist, bevorzugt die Innenscheibe (2).

8. Projektionsanordnung für ein Head-Up-Display, mindestens umfassend ein Verbundglas (10) nach einem der Ansprüche 1 bis 7 und einen Projektor (4), der auf einen Bereich (B) des Verbundglases gerichtet ist, wobei die Dicke der Zwischenschicht (3) zumindest in diesem Bereich (B) veränderlich ist.

9. Verfahren zur Herstellung eines Verbundglases (10) für ein Head-Up-Display mit einer Oberkante (O) und einer Unterkante (U), wobei
(a) eine thermoplastische Zwischenschicht (3) bereitgestellt wird, deren Dicke im Verlauf zwischen zwei gegenüberliegenden Kanten zumindest abschnittsweise veränderlich ist mit einem maximalen Keilwinkel (α) von kleiner oder gleich 0,15 mrad, wobei der Keilwinkel (α) durch Recken in eine thermoplastische Folie konstanter Dicke eingebracht wird,
(b) die Zwischenschicht (3) zwischen einer Außenscheibe (1) aus Glas mit einer Dicke von 1,4 mm bis 1,8 mm und einer Innenscheibe (2) aus Glas mit einer Dicke von 0,5 mm bis 0,9 mm angeordnet wird, wobei besagte Kanten zur Oberkante (O) und Unterkante (U) weisend ausgerichtet werden; und
(c) die Innenscheibe (2) und die Außenscheibe (1) durch Lamination miteinander verbunden werden.

10. Verwendung eines Verbundglases nach einem der Ansprüche 1 bis 7 in einem Kraftfahrzeug, bevorzugt einem Personenkraftwagen, als Windschutzscheibe, die als Projektionsfläche eines Head-Up-Displays dient.

## Claims

1. Composite glass (10) for a head-up display with an upper edge (O) and a lower edge (U), at least comprising an outer pane (1) made of glass and an inner pane (2) made of glass, which are bonded to one another via a thermoplastic intermediate layer (3), wherein the inner pane (2) has a thickness from 0.5 mm to 0.9 mm, and wherein the thickness of the intermediate layer (3) in the vertical course between the lower edge (U) and the upper edge (O) is variable at least in sections with a maximum wedge angle (α) less than or equal to 0.15 mrad,
wherein the thickness of the outer pane (1) is from 1.4 mm to 1.8 mm,
wherein the intermediate layer (3) is implemented by at least one thermoplastic film, in which the wedge angle (α) is created by stretching.

2. Composite glass (10) according to claim 1, which is a motor vehicle windshield.

3. Composite glass (10) according to one of claims 1 or 2, wherein the thickness of the inner pane (2) is from 0.6 mm to 0.8 mm.

4. Composite glass (10) according to one of claims 1 through 3, wherein the wedge angle (α) is less than or equal to 0.1 mrad.

5. Composite glass (10) according to one of claims 1 through 4, wherein the intermediate layer (3) has a minimum thickness from 0.5 mm to 1 mm, preferably from 0.6 mm to 0.9 mm.

6. Composite glass (10) according to one of claims 1 through 5, wherein the intermediate layer (3) contains at least polyvinyl butyral (PVB), ethylene vinyl acetate (EVA), polyurethane (PU), or mixtures or copolymers or derivatives thereof.

7. Composite glass (10) according to one of claims 1 through 6, wherein the outer pane (1) and/or the inner pane (2) is a chemically prestressed pane, preferably the inner pane (2).

8. Projection arrangement for a head-up display, at least comprising a composite glass (10) according to one of claims 1 through 7 and a projector (4), which is aimed at a region (B) of the composite glass, wherein the thickness of the intermediate layer (3) is variable at least in this region (B).

9. Method for producing a composite glass (10) for a head-up display with an upper edge (O) and a lower edge (U), wherein
(a) a thermoplastic intermediate layer (3) is provided, whose thickness in the course between two opposing edges is variable at least in sections with a maximum wedge angle (α) less than or equal to 0.15 mrad, wherein the wedge angle (α) is introduced into a thermoplastic film of constant thickness by stretching;
(b) the intermediate layer (3) is arranged between an outer pane (1) made of glass with a thickness from 1.4 mm to 1.8 mm and an inner pane (2) made of glass with a thickness from 0.5 mm to 0.9 mm, wherein said edges are oriented toward the upper edge (O) and lower edge (U); and
(c) the inner pane (2) and the outer pane (1) are bonded to one another by lamination.

10. Use of a composite glass according to one of claims 1 through 7 in a motor vehicle, preferably a passenger car, as a windshield, which serves as a projection surface of a head-up display.

## Revendications

1. Verre composite (10) pour un affichage tête haute avec un bord supérieur (O) et un bord inférieur (U), comprenant au moins une vitre extérieure (1) en verre et une vitre intérieure (2) en verre, qui sont reliées l'une à l'autre par une couche intermédiaire thermoplastique (3), dans lequel la vitre intérieure (2) a une épaisseur de 0,5 mm à 0,9 mm, et dans lequel l'épaisseur de la couche intermédiaire (3) dans le tracé vertical entre le bord inférieur (U) et le bord supérieur (O) est variable au moins dans les sections avec une épaisseur maximale de 0,5 mm à 0,9 mm, et dans laquelle l'épaisseur de la couche intermédiaire (3) dans le parcours vertical entre le bord inférieur (U) et le bord supérieur (O) est variable au moins dans les sections avec un angle de calage maximal (α) inférieur ou égal à 0,15 mrad,
dans lequel l'épaisseur de la vitre extérieure (1) est de 1,4 mm à 1,8 mm,
dans lequel la couche intermédiaire (3) est réalisée par au moins un film thermoplastique, dans lequel l'angle de coin (α) est créé par étirement.

2. Verre composite (10) selon la revendication 1, qui est un pare-brise de véhicule automobile.

3. Verre composite (10) selon l'une des revendications 1 ou 2, dans lequel l'épaisseur de la vitre intérieure (2) est comprise entre 0,6 mm et 0,8 mm.

4. Verre composite (10) selon l'une des revendications 1 à 3, dans lequel l'angle de calage (α) est inférieur ou égal à 0,1 mrad.

5. Verre composite (10) selon l'une des revendications 1 à 4, dans lequel la couche intermédiaire (3) a une épaisseur minimale de 0,5 mm à 1 mm, de préférence de 0,6 mm à 0,9 mm.

6. Verre composite (10) selon l'une des revendications 1 à 5, dans lequel la couche intermédiaire (3) contient au moins du polyvinyl butyral (PVB), de l'éthylène vinyl acétate (EVA), du polyuréthane (PU), ou des mélanges ou copolymères ou dérivés de ceux-ci.

7. Verre composite (10) selon l'une des revendications 1 à 6, dans lequel la vitre extérieure (1) et/ou la vitre intérieure (2) est une vitre précontrainte chimiquement, de préférence la vitre intérieure (2).

8. Dispositif de projection pour un affichage tête haute, comprenant au moins un verre composite (10) selon l'une des revendications 1 à 7 et un projecteur (4), qui est orienté vers une zone (B) du verre composite, l'épaisseur de la couche intermédiaire (3) étant variable au moins dans cette zone (B).

9. Procédé de fabrication d'un verre composite (10) pour un affichage tête haute avec un bord supérieur (O) et un bord inférieur (U), dans lequel
(a) il est prévu une couche intermédiaire (3) thermoplastique dont l'épaisseur dans le parcours entre deux bords opposés est variable au moins dans des sections avec un angle de calage maximal (α) inférieur ou égal à 0,15 mrad, l'angle de calage (α) étant introduit dans un film thermoplastique d'épaisseur constante par étirage ;
(b) la couche intermédiaire (3) est disposée entre une vitre extérieure (1) faite de verre d'une épaisseur de 1,4 mm à 1,8 mm et une vitre intérieure (2) faite de verre d'une épaisseur de 0,5 mm à 0,9 mm, dans laquelle lesdits bords sont orientés vers le bord supérieur (O) et le bord inférieur (U); et
(c) la vitre intérieure (2) et la vitre extérieure (1) sont liées l'une à l'autre par lamination.

10. Utilisation d'un verre composite selon l'une des revendications 1 à 7 dans un véhicule automobile, de préférence une voiture de tourisme, comme pare-brise, qui sert de surface de projection d'un affichage tête haute.
